# EUROPEAN PATENT SPECIFICATION

(11) **EP 2 361 793 B1**
(45) Date of publication and mention of the grant of the patent: **18.01.2017**
(21) Application number: 10154791.7
(22) Date of filing: 26.02.2010
(51) Int. Cl.: B60F 1/00, B61D 15/00, B61K 5/02

(54) **Vehicle provided with a remote control system**
Fahrzeug mit einem Fernbedienungsystem
Véhicule ayant un système de contrôle à distance

(43) Date of publication of application: 31.08.2011
(73) Proprietor: LEONARDO S.P.A., 00195 Roma (IT)
(72) Inventor: Sgherri, Guido Roberto, 19136, LA SPEZIA (IT); Franceschi, Giuliano, 19136, LA SPEZIA (IT); La Spina, Giovanni, 19136, LA SPEZIA (IT); Bellotti, Carlo Felice, 19136, LA SPEZIA (IT)
(74) Representative: Di Gennaro, Sergio

(56) References cited:
- CA-A1- 2 348 215
- DE-A1- 2 300 858
- DE-C1- 19 738 720
- GB-A- 2 324 775

## Description

The present invention refers to a vehicle provided with an electronic remote control system and with a mechanism for the motion. In particular, the present invention relates to a vehicle provided with a mechanism for the motion which permits to the vehicle to run both on driveway and on rails and to possess a remote control system which permits the remote piloting of the vehicle itself.

To the state of the art are known vehicles, fit for the maintenance of the railway lines, provided with metallic wheels through which they can position and cover tracks of railway rails.

These vehicles are also provided with conventional tired wheels, which are lowered if necessary in a position lower than these metallic wheels and which permit the motion of the vehicle even on vehicular roads.

These types of vehicles can also be used for purposes of monitoring the territory, or as emergency vehicles within interventions of the civil protection, such as in case of monitoring of fires, landslides, floods and others.

For these purposes, the vehicle can also be equipped with sensors such as for instance optical sensors (night and day), acoustic sensors, antennas for receiving and transmitting radio and/or satellite GPS type signals, sensors for identifying the presence of harmful substances, sensors for identifying atmospheric phenomena (temperature, pressure, humidity, and so on).

Furthermore, the vehicle can be provided with a robotized arm and with a lifting crane for objects, or also provided with a termination for the drawing of the objects.

The Applicant has observed that for these purposes the presence of personnel on board of them for the motion and the control of the vehicles themselves is a danger and also a limit for the efficacy of the intervention of the vehicle. In fact, the personnel on board can be subject to dangers deriving from the potential effects of the natural event to be monitored; furthermore, if the personnel cannot operate, the vehicle loses its efficacy in the operations of monitoring of this natural event.

The present invention solves this issue by providing a vehicle provided with a system for the motion which can be remotely commanded through an appropriate control system.

DE 197 38 720 C1 discloses a vehicle which has a radio remote controller with a transmitter separate from the vehicle and a receiver integrated into the vehicle connected to a control unit which is connected via cables to control elements for braking, accelerating, steering etc. and/or which interacts with trailers and/or carriages coupled to the vehicle. The control elements are moved to a safety position by redundant switching elements in the event of an emergency switch-off of the circuit. with the control elements in their emergency positions the vehicle is brought to a stop.

An aspect of the present invention relates to a vehicle provided with remote control system having the characteristics of the attached claim 1.

The characteristics and the advantages of the vehicle according to the present invention will be clearer and evident from the following description, exemplificative and nonlimiting, of a form of embodiment with reference to the attached figures wherein:

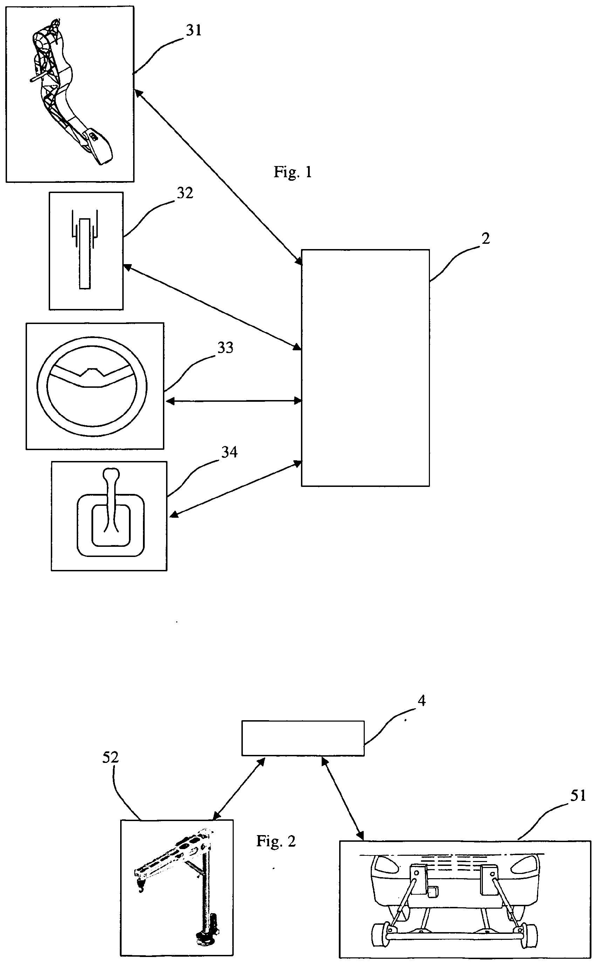

- Figure 1 is a block diagram of the vehicle driving Figure 2 is a block diagram of the control system for the accessories present on board of the vehicle.

With reference to the mentioned figures, the vehicle provided with the remote control system according to the present invention schematically comprises a traditional frame, a front axis, a rear axis provided with tired wheels operated by a mechanism of transmission of the motion originated by an engine of the vehicle.

On both the front and the rear axis of the vehicle there is a mechanism for the motion which comprises a couple of metallic wheels of the type suitable for coupling with railway rails, connected to a transversal axis. This axis is connected to the frame of the vehicle through a first couple of tie rods positioned in substantially vertical position and a second couple of tie rods positioned in substantially horizontal position. These couples of tie rods are connected at one end to this axis and at the opposed end to the frame of the vehicle, in such a way that the axis with the metallic wheels is positioned in proximity of the tired wheels.

These couples of tie rods are extensible (e.g. telescopically or through hydraulic pistons) in such a way as to bring the axis from a rest position to a working position.

On both the axis of the vehicle, at least a portion of these transversal axis can vary its length, in such a way as to permit to vary the distance between the two wheels for rail.

The vehicle can adapt in this way to the different gauges of the various lines on rail (e.g. railway lines, tramcar, underground lines and so on...).

Furthermore, this mechanism for the motion in the central zone of the frame of the vehicle, below it, comprises a fifth-wheel unit being able to lift the vehicle itself from the rails and to rotate it on itself by 180° thus changing the motion direction. In particular, this unit comprises a pedestal for leaning against the ground upon which is rotatably mounted a fifth-wheel through a central housing of this fifth-wheel wherein is positioned a bearing. The fifth-wheel and the pedestal are constrained to the lower portion of the frame of the vehicle through a couple of pistons which permit to the pedestal and to the fifth-wheel to come down from the rest position under the frame, in direction of the ground up to the contact with it.

Suitable means of rotation permit the fifth-wheel and the frame of the vehicle to freely rotate with respect to the pedestal leaned against the ground, in such a way as to permit the rotation on itself of the vehicle itself.

The vehicle according to the present invention can be advantageously used as emergency vehicle, for purposes typical of the civil protection or similar purposes, or as vehicle for the monitoring for military purposes.

The control system of the vehicle comprises a remote guidance system 2 for the motion of the vehicle and a remote command system 4 of the accessories present on board the vehicle itself. These accessories comprise the above described mechanism for motion 51, sensors such as for instance optical sensors (night and day), acoustic sensors, antennas for receiving and transmitting radio and/or satellite GPS type signals, sensors for identifying the presence of harmful substances, sensors for identifying atmospheric phenomena (temperature, pressure, humidity and so on...). Furthermore, the vehicle is provided with a robotized arm 52 and a lifting crane for objects, or also provided with a termination for the drawing of objects.

The guidance system comprises an electronic guidance unit 2 which communicates with a plurality of servo-actuators 31, 32, 33, 34 for identifying and controlling the steering, the gear box, the brakes and the clutch of the vehicle respectively.

The control system for these accessories comprises a control unit 4 for controlling the various accessories by means of appropriate actuators.

The remote control system comprises an electronic interface device usable by an operator who communicates (e.g. via radio) with these guidance unit 2 and control unit 4, in such a way as to transmit to them the movements to be given to the vehicle and to control the operations to be done to the accessories.

## Claims

1. A vehicle comprising a traditional frame, a front axis, a rear axis provided with tired wheels operated by a mechanism of transmission of the motion originated by an engine,
said mechanism also comprising on both the front and the rear axis of the vehicle a couple of metallic wheels, of the type suitable for coupling with railway rails, connected to a transversal axis, said mechanism further comprising a vehicle remote control system including a driving system for the remote motion of the vehicle and a control system of accessories present on the vehicle itself, an electronic interface device that can be used by an operator that communicates with said driving and control systems, so that to transmit to them the movements to be given to the vehicle and to control the operations to be done by the accessories
**characterised in that** the surface of the metallic wheels is in contact with the one of the tired wheels, so that they can transmit by friction the movement of rotation to said wheels for rails;
**in that** said accessories comprise a mechanism of hybrid motion (51), optical sensors (night and day), acoustic sensors, antennas for receiving and transmitting radio and/or satellite GPS type signals, sensors for identifying the presence of harmful substances, sensors for identifying atmospheric phenomena (temperature, pressure, humidity, and so on), a robotized arm (52), that can be used as lifting crane for objects, or also provided with a termination for the drawing of objects; and
**in that** said motion mechanism in the central zone of the vehicle frame, below it, comprises a fifth wheel unit being able to lift the vehicle itself from the rails and to rotate it on itself by 180° thus changing the motion direction.

2. A vehicle according to claim 1, wherein on both axis of the vehicle, at least a portion of these transversal axis can vary its length, in such a way as to permit to vary the distance between the two wheels for rail.

3. A vehicle according to claim 1, wherein said transversal axis is connected to said frame through a first couple of tie rods positioned in substantially vertical positon and a second couple of tie rods positioned in substantially horizontal position.

4. A vehicle according to claim 2, wherein said couples of tie rods are connected, at one end, to said transverse axis and, at the oppsed end, to the frame of the vehicle, in such a way that the axis with said metallic wheels is positioned in proximity of said tired wheels.

5. A vehicle according to claim 2 or 3, wherein said couples of tie rods are extensible in such a way as to bring the axis from a rest position to a working position.

6. A vehicle according to claim 1, wherein said fifth wheel unit comprises a pedestal for leaning against the ground upon which is rotatably mounted a fifth wheel trhough a central housing of said fifth wheel wherein is positioned a bearing.

7. A vehicle according to claim 5, wherein said fifth wheel and said pedestal are constrained to the lower portion of said frame through a couple of piston which permit to the pedestal and to the fifth wheel to come down from the rest position under the frame in the direction of the ground up to contact with it.

8. A vehicle according to claim 1, wherein the driving system comprises an electronic driving unit (2) that communicates with a plurality of servo-actuators (31, 32, 33, 34) for identifying and controlling the steering, the gear box, the brakes and the clutch of the vehicle respectively.

9. A vehicle according to claim 1, wherein the control system comprises a control unit (4) for controlling the various accessories by means of appropriate actuators.

## Patentansprüche

1. Fahrzeug, das einen herkömmlichen Rahmen, eine Vorderachse und eine Hinterachse umfasst, die mit bereiften Rädern versehen ist, die durch einen Mechanismus zur Übertragung der von einem Motor stammenden Bewegung betätigt werden,
wobei der Mechanismus auch auf sowohl der Vorder- als auch der Hinterachse des Fahrzeugs ein Paar Metallräder vom zur Kopplung mit Eisenbahnschienen geeigneten Typ umfasst, die mit einer Querachse verbunden sind, wobei der Mechanismus ferner ein Fahrzeug-Fernsteuerungssystem, das ein Antriebssystem für die entfernte Bewegung des Fahrzeugs, ein Steuersystem für Zubehörteile, die auf dem Fahrzeug selbst vorhanden sind, und ein elektronisches Schnittstellengerät umfasst, das durch einen Bediener verwendet werden kann und das mit dem Antriebs- und dem Steuersystem kommuniziert, derart, dass auf sie die Bewegungen, die dem Fahrzeug zu verleihen sind, übertragen werden und die Betätigungen, die durch die Zubehörteile durchzuführen sind, gesteuert werden,
**dadurch gekennzeichnet, dass** die Fläche der Metallräder mit dem einen von den bereiften Rädern in Berührung steht, derart, dass sie durch Reibung die Drehbewegung auf die Schienenräder übertragen können;
dadurch, dass die Zubehörteile einen hybriden Bewegungsmechanismus (51), optische Sensoren (Nacht und Tag), akustische Sensoren, Antennen zum Empfangen und Senden von Signalen vom Typ Funk und/oder Satelliten-GPS, Sensoren zur Identifizierung des Vorhandenseins von Schadstoffen, Sensoren zur Identifizierung atmosphärischer Erscheinungen (Temperatur, Druck, Feuchtigkeit und so weiter), einen robotisierten Arm (52), der als Hebekran für Gegenstände verwendet werden kann, oder auch mit einem Anschlussteil zum Ziehen von Gegenständen versehen werden kann, umfassen; und
dadurch, dass der Bewegungsmechanismus im mittleren Bereich des Fahrzeugrahmens darunter eine fünfte Radeinheit umfasst, die in der Lage ist, das Fahrzeug selbst von den Schienen anzuheben und es um 180° um sich selbst zu drehen, wodurch die Bewegungsrichtung geändert wird.

2. Fahrzeug nach Anspruch 1, wobei auf beiden Achsen des Fahrzeugs die Länge von mindesten einem Abschnitt von dieser Querachse derart variieren kann, dass sie es erlaubt, den Abstand zwischen den zwei Schienenrädern zu variieren.

3. Fahrzeug nach Anspruch 1, wobei die Querachse mit dem Rahmen durch ein erstes Paar von Zugstangen, die in einer im Wesentlichen vertikalen Position positioniert sind, und ein zweites Paar von Zugstangen verbunden ist, die in einer im Wesentlichen horizontalen Position positioniert sind.

4. Fahrzeug nach Anspruch 2, wobei die Paare von Zugstangen an einem Ende mit der Querachse und am entgegengesetzten Ende derart mit dem Rahmen des Fahrzeugs verbunden sind, dass die Achse mit den Metallrädern in der Nähe von den bereiften Rädern positioniert ist.

5. Fahrzeug nach Anspruch 2 oder 3, wobei die Paare von Zugstangen derart ausziehbar sind, dass sie die Achse von einer Ruheposition in eine Arbeitsposition bringen.

6. Fahrzeug nach Anspruch 1, wobei die fünfte Radeinheit einen Untersatz umfasst, um sich auf dem Boden aufzustützen, auf dem drehbar ein fünftes Rad durch ein mittleres Gehäuse des fünften Rades angebracht ist, in dem ein Lager positioniert ist.

7. Fahrzeug nach Anspruch 5, wobei das fünfte Rad und der Untersatz auf den unteren Abschnitt des Rahmens durch ein Paar Kolben eingespannt sind, die es dem Untersatz und dem fünften Rad erlauben, von der Ruheposition unter dem Rahmen in die Richtung des Bodens bis zur Berührung damit herunterzukommen.

8. Fahrzeug nach Anspruch 1, wobei das Antriebssystem eine elektronische Antriebseinheit (2) umfasst, die mit mehreren Servo-Stellgliedern (31, 32, 33, 34) kommuniziert, um die Lenkung, das Getriebe, die Bremsen beziehungsweise die Kupplung des Fahrzeugs zu identifizieren und zu steuern.

9. Fahrzeug nach Anspruch 1, wobei das Steuersystem eine Steuereinheit (4) zum Steuern der verschiedenen Zubehörteile mittels zweckmäßiger Stellglieder umfasst.

## Revendications

1. Véhicule comprenant un châssis traditionnel, un axe avant, un axe arrière pourvu de roues équipées de pneumatiques actionnées par un mécanisme de transmission d'un mouvement engendré par un moteur, ledit mécanisme comprenant également, aussi bien sur l'axe avant que sur l'axe arrière du véhicule, une paire de roues métalliques du type adapté pour s'accoupler à des rails de voie ferrée, connectées à un axe transversal, ledit mécanisme comprenant en outre un système de télécommande de véhicule comprenant un système d'entraînement pour le déplacement distant du véhicule et un système de commande d'accessoires présents sur le véhicule lui-même, un dispositif d'interface électronique qui peut être utilisé par un opérateur qui communique avec lesdits systèmes d'entraînement et de commande, de manière à leur transmettre les déplacements à effectuer par le véhicule et à commander les opérations à effectuer par les accessoires,
**caractérisé en ce que** la surface des roues métalliques est en contact avec l'une desdites roues équipées de pneumatiques, de manière à ce qu'elles puissent transmettre par frottement le mouvement de rotation auxdites roues pour rails ;
**en ce que** lesdits accessoires comprennent un mécanisme de mouvement hybride (51), des capteurs optiques (de nuit et de jour), des capteurs acoustiques, des antennes pour recevoir et transmettre des signaux de type radio et/ou satellite GPS, des capteurs pour identifier la présence de substances nocives, des capteurs pour identifier des phénomènes atmosphériques (température, pression, humidité, etc.), un bras robotisé (52), qui peut être utilisé comme grue de levage pour de objets ou pourvu également d'une terminaison pour tirer des objets ; et
**en ce que** ledit mécanisme de déplacement dans la zone centrale du châssis de véhicule, sous celui-ci, comprend une cinquième unité de roue capable de lever le véhicule lui-même des rails et de le faire tourner sur lui-même de 180°, changeant par conséquent la direction de déplacement.

2. Véhicule selon la revendication 1, dans lequel, sur les deux axes du véhicule, au moins une portion dudit axe transversal peut varier en longueur de manière à pouvoir faire varier la distance entre les deux roues pour rail.

3. Véhicule selon la revendication 1, dans lequel ledit axe transversal est connecté audit châssis via une première paire de barres de liaison positionnées en direction substantiellement verticale et une deuxième paire de barres de liaison positionnées en position substantiellement horizontale.

4. Véhicule selon la revendication 2, dans lequel lesdites paires de barres de liaison sont connectées, à une extrémité, audit axe transversal et, à l'extrémité opposée, au châssis du véhicule, de telle sorte que l'axe portant lesdites roues métalliques est positionné à proximité desdites roues équipées de pneumatiques.

5. Véhicule selon la revendication 2 ou 3, dans lequel lesdites paires de barres de liaison sont extensibles de manière à amener l'axe d'une position de repos à une position de travail.

6. Véhicule selon la revendication 1, dans lequel ladite cinquième unité de roue comprend un piédestal pour s'appuyer contre le sol, sur lequel est montée de façon rotative une cinquième roue à travers un bâti central de ladite cinquième roue dans lequel est agencé un palier.

7. Véhicule selon la revendication 5, dans lequel ladite cinquième roue et ledit piédestal sont contraints dans la portion inférieure dudit châssis par une paire de pistons qui permettent au piédestal et à la cinquième roue de descendre de la position de repos sous le châssis en direction du sol jusqu'à entrer en contact avec celui-ci.

8. Véhicule selon la revendication 1, dans lequel le système d'entraînement comprend une unité d'entraînement électronique (2) qui communique avec une pluralité de servo-actionneurs (31, 32, 33, 34) pour identifier et commander respectivement la direction, la boîte de vitesses, les freins et l'embrayage du véhicule.

9. Véhicule selon la revendication 1, dans lequel le système de commande comprend une unité de commande (4) pour commander les divers accessoires à l'aide d'actionneurs appropriés.
